# EUROPEAN PATENT SPECIFICATION

(11) **EP 3 278 922 B1**
(45) Date of publication and mention of the grant of the patent: **05.12.2018**
(21) Application number: 16182548.4
(22) Date of filing: 03.08.2016
(51) Int. Cl.: B23Q 1/01, B23Q 11/00, F16C 29/12

(54) **SLIDING SEAT DEVICE WITH SURROUNDING STRUCTURE**
SCHIEBESITZVORRICHTUNG MIT UMGEBENDER STRUKTUR
DISPOSITIF DE SIÈGE COULISSANT AVEC LA STRUCTURE ENVIRONNANTE

(43) Date of publication of application: 07.02.2018
(73) Proprietor: Maxxtron Technology Co., Ltd., Taichung City 432 (TW)
(72) Inventor: CHIU, CHUN-LING, 432 Wangtian Vil., Dadu Dist., Taichung City (TW)
(74) Representative: 2K Patentanwälte Blasberg Kewitz & Reichel

(56) References cited:
- EP-A1- 2 828 023
- EP-A1- 2 992 994
- JP-A- S6 165 735
- JP-U- S63 147 231

## Description

### BACKGROUND OF THE INVENTION

### 1. Field of the Invention:

The present invention relates to sliding devices, and more particularly, to a sliding seat device with surrounding structure for a bridge type machining center.

### 2. Description of the Related Art:

A sliding seat device according to the preamble of appended claim 1 is known from document EP 2 992 994.

Ordinarily, a bridge type machining center is mainly used to process large parts, so that the volume of a bridge type machining center is usually relatively large.

A conventional bridge type machining center structurally includes a main body, a sliding seat, and a sliding pillar. Two sides of the main body are provided with a pillar, respectively, with a beam transversely disposed between the two pillars. Two linear rails are disposed on the beam, such that the two pillars reciprocate along a Y-axis direction which extends in vertical to the main body. The sliding seat is slidingly disposed on the beam, such that the sliding seat reciprocates along an X-axis direction which extends in parallel to the main body. The sliding pillar slidingly passes through the sliding seat, such that the sliding pillar reciprocates along a Z-axis direction which perpendicularly extends through the bottom face and the top face of the main body.

Due to the large scale of a bridge type machining center, the pillars are usually **1-3** meters long. When the two pillars reciprocate along the Y-axis direction of the main body, the sliding seat and the sliding pillar are unable to resist a counter force produced against the Y-axis. As a result, during the processing, a vertical bias of the sliding pillar is easily produced, causing a lower stability and accuracy of the processing.

Due to the lack of an adjusting mechanism between the sliding pillar and the sliding seat, when the sliding pillar is vertically biased, the correctness is unable to be immediately provided. After a long period of usage, the sliding pillar easily deforms. Therefore, the industry needs a solution for resolving the issue that the bridge type machining center is only capable of resisting a unidirectional counterforce. Also, an adjusting mechanism shall be provided, so as to provide an immediate adjustment whenever a vertical bias of the sliding pillar occurs and thus prevent the deformation of the sliding pillar from happening.

### SUMMARY OF THE INVENTION

For improving aforementioned issues, embodiments of the present invention disclose a sliding seat device with surrounding structure. An assistant plate is disposed on one lateral side of the sliding pillar, with adjusting units passing through the assistant plate, such that the assistant plate is pressed against the protruding rail on one side of the sliding pillar, whereby the biasing angle of the sliding pillar along the Z-axis direction of the main body is corrected. Therefore, an adjusting mechanism is provided, so as to prevent the sliding pillar from deforming due to a long period of usage.

For achieving the objectives above, embodiments of the present invention provide a sliding seat device with surrounding structure, comprising:
a main body provided with a sliding portion;
a sliding seat slidingly disposed on the sliding portion, the sliding seat reciprocating along an X-axis direction of the main body, the sliding seat provided with a housing;
a sliding pillar passing through the housing, the sliding pillar reciprocating along a Z-axis direction of the main body, one side of the sliding pillar provided with a protruding rail disposed along the Z-axis direction of the main body;
an assistant plate connected with the sliding seat and facing the protruding rail; and
an adjusting unit passing through the assistant plate and pushing against the protruding rail, the adjusting unit correcting a vertical bias between the sliding pillar and the main body.

Preferably, three sides of the sliding pillar excluding the side on which the protruding rail is disposed are provided with at least one sliding device, respectively, such that the sliding pillar is allowed to reciprocate along the Z-axis direction of the body by use of the at least one sliding device.

Preferably, each sliding device is provided with a sliding groove and a sliding rail. Each sliding groove is concavely disposed in the housing along the Z-axis direction of the main body. Each sliding rail is disposed on one side of the sliding pillar along the Z-axis direction of the main body.

Preferably, the adjusting unit is provided with a resisting member and a correcting member. The resisting member pushes against the protruding rail. The correcting member is screwedly fastened to the resisting member and screwedly disposed on one side of the assistant plate opposite to the side thereof facing the protruding rail.

Preferably, the correcting member is provided with a moderating portion pushing against the assistant plate, such that a correcting distance is produced between the correcting member and the assistant plate. Adjusting the correcting distance enables the resisting member to move against the Y-axis direction of the main body.

With such configuration, the main objective of the present invention is that the three sides of the sliding seat contacting the sliding pillar are provided with at least one sliding device, respectively, and the sliding pillar is provided with the protruding rail against which the adjusting unit pushes. When the present invention moves along the X-axis or Y-axis direction of the main body, the counter force produced thereof is resisted, such that the sliding pillar is prevented from biasing, so as to improve the deformation issue after a long period of usage.

Another objective of the present invention is that when the sliding pillar slightly deforms due to tool collision, the vertical degree of the sliding pillar against the main body is immediately corrected by the adjusting unit. With the resisting member pushing against the protruding rail, and by adjusting the correcting distance for the resisting member to move along the Y-axis direction of the main body, the bias angle of the sliding pillar is corrected. Therefore, an immediate correctness is provided to the biasing sliding pillar, so as to overcome the deformation issue and increase the service life of the present invention.

Another objective of the present invention is that, with the assistant plate slidingly disposed on the beam and the adjusting unit pushing against the sliding pillar, the weight of the sliding seat is supported, such that the sliding deformation caused after a long period of usage is prevented.

### BRIEF DESCRIPTION OF THE DRAWINGS

**Fig. 1** is a perspective view of an embodiment in accordance with the present invention.
**Fig. 2** is a partial top view of the embodiment in accordance with the present invention.
**Fig. 2A** is a partially enlarged view of **Fig. 2****.**
**Fig. 3** is a partially sectional perspective view of the embodiment in accordance with the present invention, illustrating the adjusting member pushing against the protruding rail.
**Fig. 4** is an exploded view of the adjusting unit.
**Fig. 5** is a perspective view of the adjusting unit, illustrating the rolling portion of the resisting member comprising plural needle rollers.
**Fig. 6** is a cross-sectional view taken along **6-6** of **Fig. 1**, illustrating the sliding pillar being arranged in parallel to the Z-axis direction of the main body.
**Fig. 7** is another cross-sectional view taken along **6-6** of **Fig. 1**, illustrating the adjusting unit correcting a bias of the sliding pillar against the main body along the Z-axis direction.
**Fig. 8** is a cross-sectional view taken along **8-8** of **Fig. 6**, illustrating the moderating portion not yet being grindingly adjusted.
**Fig. 9** is a cross-sectional view taken along **9-9** of **Fig. 7**, illustrating the moderating portion being grindingly processed, such that the correcting distance **L** varies into the correcting distance **LI.**

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

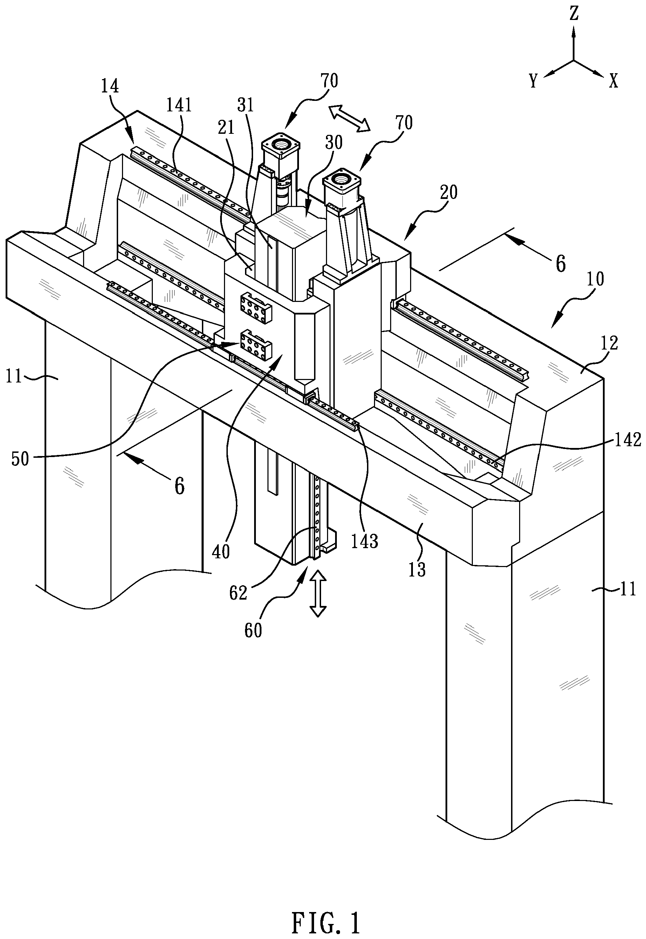

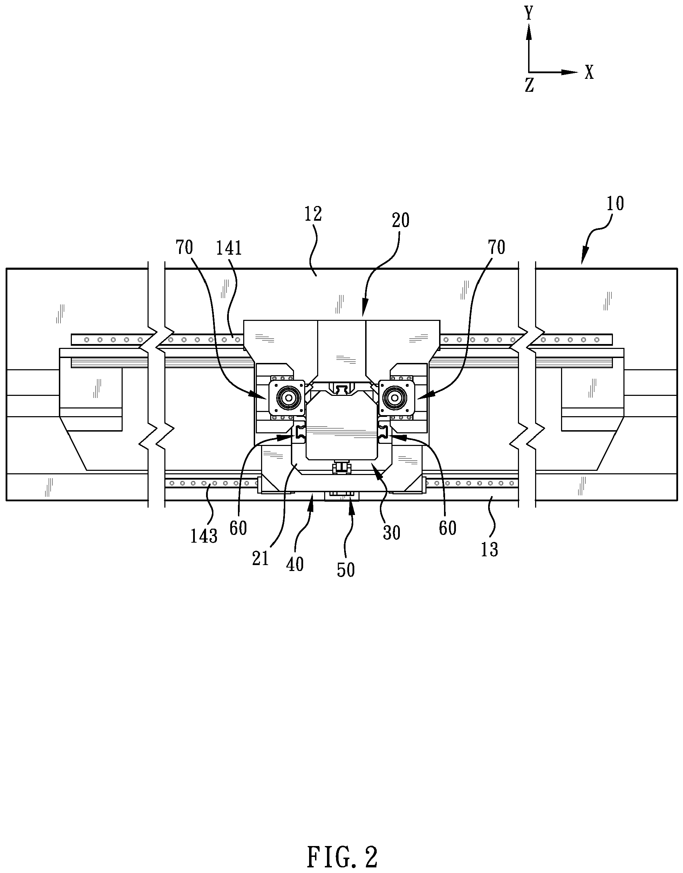

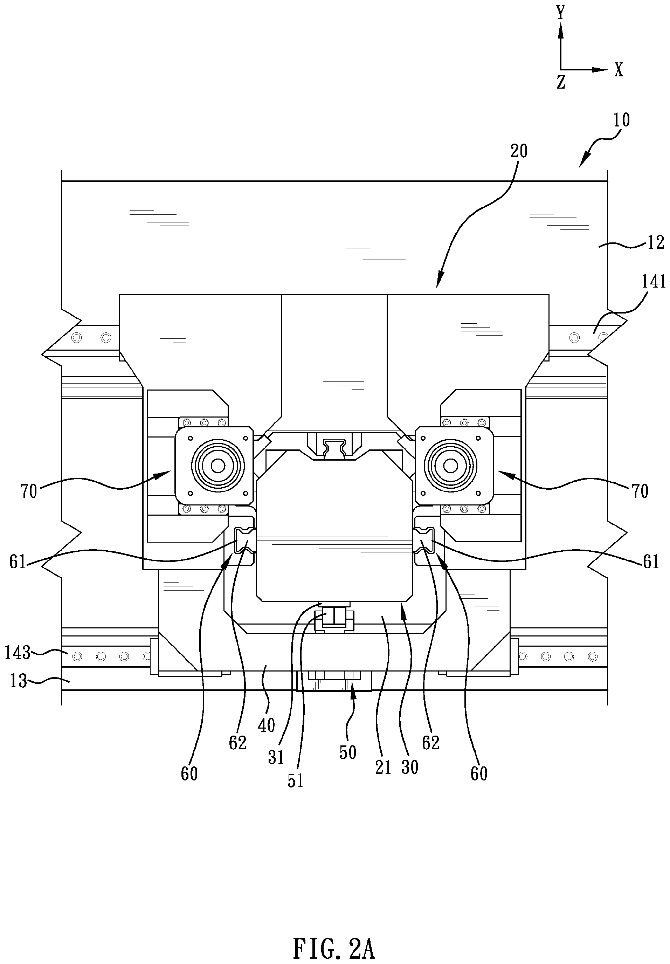

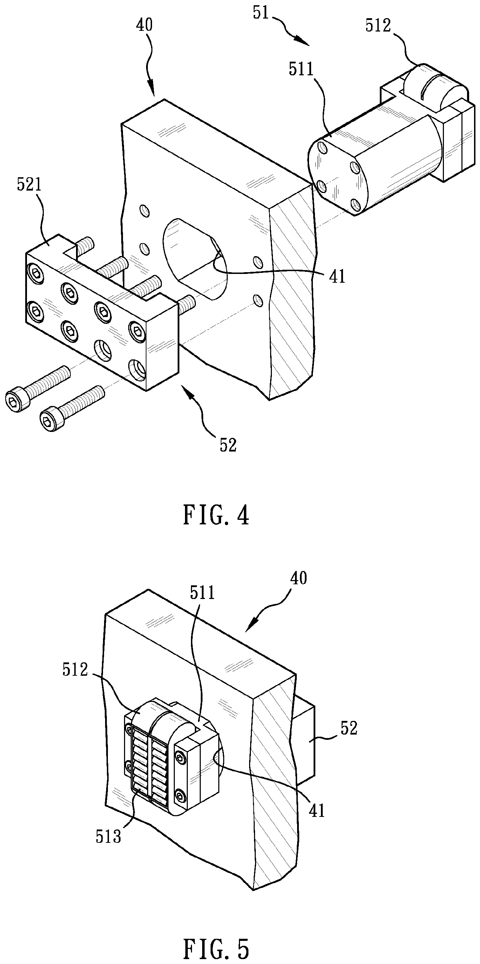

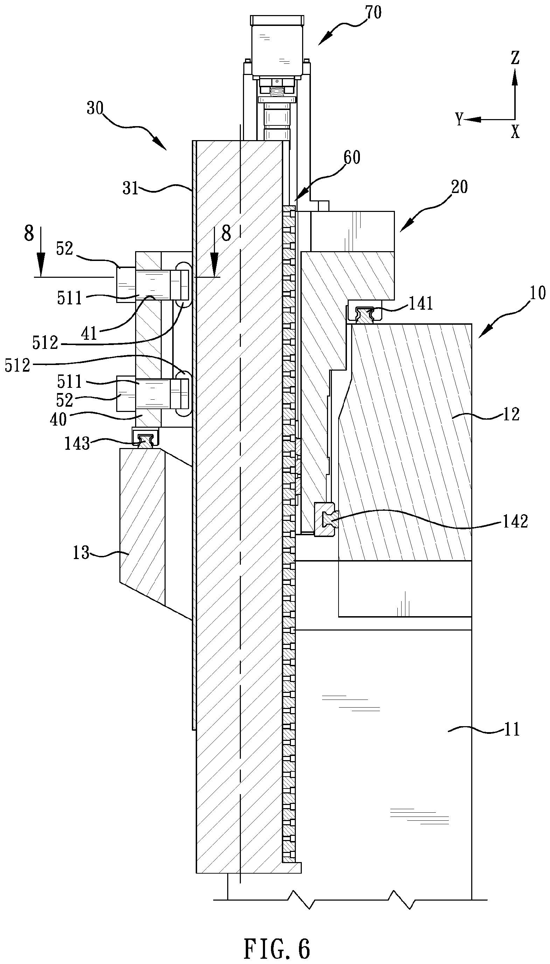

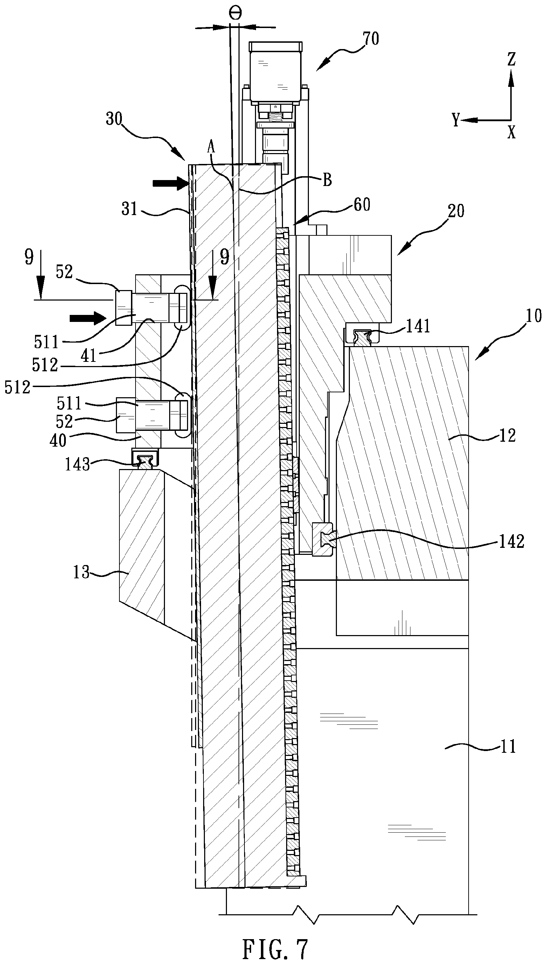

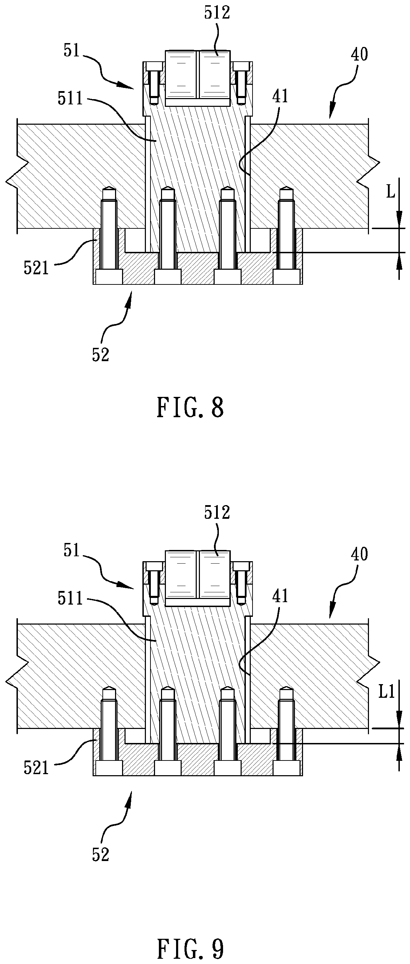

Referring to **Fig. 1** to **Fig. 9**, embodiments of the present invention provide a sliding seat device with surrounding structure, which is applied to a bridge type machining center, comprising a main body **10**, a sliding seat **20**, a sliding pillar **30**, an assistant plate **40**, and an adjusting unit **50.** With the assistant plate **40** disposed on one side of the sliding pillar **30** and the adjusting unit **50** passing through the assistant plate **40** to push on one side of the sliding pillar **30**, the bias angle between the sliding pillar **30** and the main body **10** along the Z-axis direction is corrected. Therefore, an adjusting mechanism is provided to prevent the sliding pillar **30** deformation due to a long period of usage from happening.

The main body **10** has two sides thereof provided with a pillar **11**, respectively, and plural beams transversely disposed between the two pillars **11.** The two pillars **11** are disposed on the bridge type machining center. In the embodiments of the present invention, the two beams are provided, respectively a first beam **12** and a second beam **13.** The height of the first beam **12** is higher than the height of the second beam **13.** The sliding seat **20** is disposed on the first beam **12**, and the assistant plate **40** is disposed on the second beam **13.**

The main body **10** is provided with a sliding portion **14** which is formed in plural linear rails, such that the sliding seat **20** and the assistant plate **40** are slidingly disposed on the sliding portion **14.** In The embodiments of the present invention, the linear rails are provided in a number of three, respectively a first linear rail **141**, a second linear rail **142**, and a third linear rail **143.** The first linear rail **141** and the second linear rail **142** are disposed on the first beam **12**; the third linear rail **143** is disposed on the second beam **13.** The height of the first linear rail **141** disposed on the first beam **12** is higher than height of the second linear rail **142** disposed on the first beam **12.** The height of the third linear rail **143** disposed on the second beam **13** is higher than the height of the second linear rail **142** disposed on the first beam **12.**

The sliding seat **20** is slidingly disposed on the first linear rail **141** on the first beam **12**, wherein the sliding seat **20** is triggered by a driving source (not shown in the drawings) to reciprocate along the X-axis direction of the main body **10.** In addition, the sliding seat **20** is provided with a housing **21**, wherein the sliding pillar **30** is slidingly disposed in the housing **21** and reciprocates along the Z-axis direction of the main body **10.** Further, two sides on top of the sliding seat **20** is provided with a power source **70** and connected with the sliding pillar **30**, respectively, for driving the sliding pillar **30** to reciprocate along the Z-axis direction of the main body **10.** In the embodiments of the present invention, the power source **70** is a motor.

The sliding pillar **30** passes through the housing **21** of the sliding seat **20.** One lateral side of the sliding pillar **30** facing the Z-axis direction of the main body **10** is provided with a protruding rail **31.** The other three lateral sides of the sliding pillar **30** excluding the side provided with the protruding rail **31** are provided with at least one sliding device **60**, respectively, wherein each sliding device **60** is provided with a sliding groove **61** and a sliding rail **62.** Each sliding groove **61** is concavely disposed on an inner lateral side of the housing **21** along the Z-axis direction of the main body **10**, respectively. Each sliding rail **62** is disposed on a lateral side of the sliding pillar **30** along the Z-axis direction of the main body, respectively. Therefore, the sliding pillar **30** and the sliding seat **20** are slidingly matched in a more stable combination manner. When the sliding pillar **30** moves along the Z-axis direction of the main body **10**, shaking between the sliding pillar **30** and the sliding seat **20** less possibly occurs. Power source **70** triggers the sliding pillar **30** to reciprocate through the sliding device **60** along the Z-axis direction of the main body **10.** In the embodiments of the present invention, three lateral sides of the sliding pillar **30** excluding the side provided with the protruding rail **31** is provided with one sliding device **60**, respectively. When the present invention is disposed on a relatively larger bridge type machining center, the sliding pillar **30** is larger in the volume thereof, and the amount of the sliding device **60** provided on the three lateral sides of the sliding pillar **30** other than the side provided with the protruding rail **31** is increased to two.

The assistant plate **40** is connected with the sliding seat **20** and disposed on one side of the main body **10.** The assistant plate **40** is formed in a U shape, wherein the concave thereof faces the protruding rail **31** of the sliding pillar **30.** The bottom face of the assistant plate **40** is slidingly disposed on the third linear rail **143** of the second beam **13.** Also, a through hole **41** passes through the assistant plate **40.** In an embodiment of the present invention, the through hole **41** is formed in a non-circular shape, and the amount of the through hole **41** provided is two, while the two through holes **41** are disposed on the assistant plate **40** and arranged in vertical along the Z-axis direction of the main body, respectively.

The adjusting unit **50** passes through the assistant plate **40.** In an embodiment of the present invention, the amount of the adjusting unit **50** provided is two, while the two adjusting units **50** are disposed on the assistant plate **40** and arranged in vertical along the Z-axis direction of the main body, respectively. Each of the adjusting unit **50** comprises one resisting member **51** and one correcting member **52.** The correcting member **52** is screwedly combined with the corresponding resisting member **51.** The correcting member **52** is disposed on the outer lateral side of the assistant plate **40** opposite to the side thereof facing the protruding rail **31**; the resisting member **51** passes through the corresponding through hole **41** the assistant plate **40** and pushes against the protruding rail **31.** The two resisting members **51** and the two correcting members **52** are vertically arranged along the Z-axis direction of the main body **10** and disposed on the assistant plate **40**, and the two resisting members **51** push against the protruding rail **31.**

Furthermore, one side of the resisting member **51** is provided with a combining portion **511** and a rolling portion **512** oppositely disposed against the combining portion **511.** The combining portion **511** passes through the through hole **41** of the assistant plate **40** to be fastened with the correcting member **52**, while the rolling portion **512** pushes against the protruding rail **31.** The combining portion **511** is formed in a non-circular shape, and the shape of the outer periphery of the combining portion **511** matches with the shape of the through hole **41**, so as to prevent the resisting member **51** from rotating against the correcting member **52.** In addition, the rolling portion **512** includes plural needle rollers **513.** When the sliding pillar **30** moves along the Z-axis direction of the main body **10**, the rolling portion **512** decreases the friction produced by the sliding pillar **30** movement, whereby the sliding pillar **30** movement along the Z-axis direction of the main body **10** is smoothly facilitated.

The correcting member **52** is provided with a moderating portion **521**, while the moderating portion **521** pushes against the assistant plate **40.** The moderating portion **521** defines a correcting distance **L** between the correcting member **52** and the assistant plate **40.** By adjusting the correcting distance **L,** the resisting member **51** moves along the Y-axis direction of the main body **10**, and the position of the sliding pillar **30** in the housing **21** is adjusted. In an embodiment of the present invention, the correcting member **52** is formed in a U shape. The moderating portion **521** is disposed on two lateral sides of the correcting member **52**, and the thickness of the moderating portion **521** defines the length of the correcting distance L. The thickness of the moderating portion **521** is allowed to be adjusting by grinding. The ground thickness of the moderating portion **521** is thinner, such that the correcting distance **L** varies into a correcting distance **LI.**

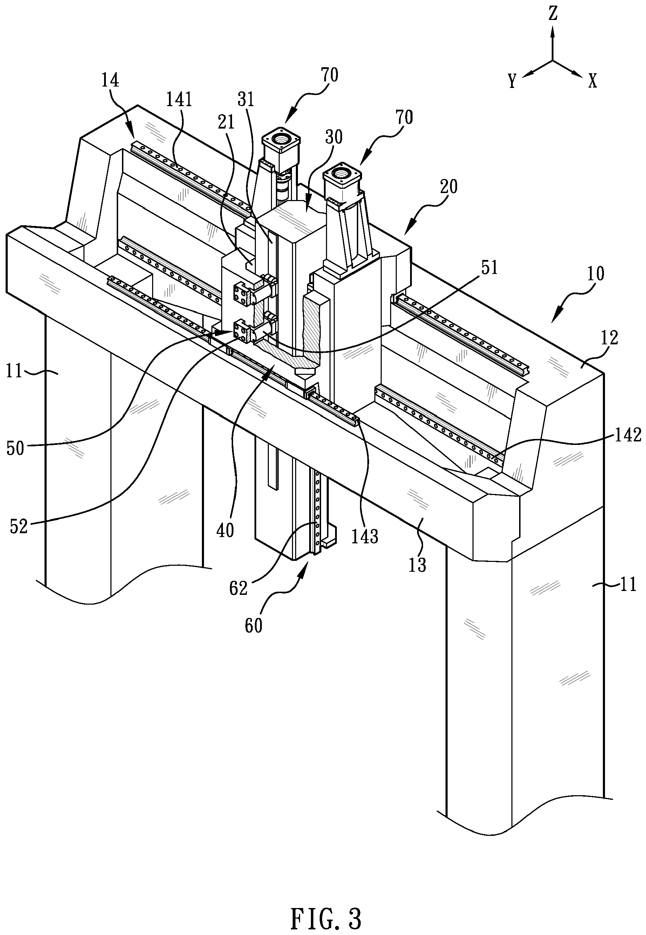

Referring to **Fig. 3** and **Fig. 6** to **Fig. 9**, when the present invention moves along the Y-axis direction of the main body **10** and causes a tool collision to occur upon the sliding pillar **30**, a bias angle **θ** is thus produced between an axis **A** axially extending from the sliding pillar **30** and a vertical line **B** extending along the Z-axis direction of the main body **10.** By grindingly processing the thickness of the moderating portion **521** of the correcting member **52**, the correcting distance **L** is moderated into the correcting distance **L1**, such that the resisting member **51** moves along the Y-axis direction of the main body **10** and pushes the sliding pillar **30**, so as to correct the bias angle **θ**; therefore, the axis **A** of the sliding pillar **30** and the vertical line **B** of the main body **10** are arranged in alignment with each other.

With the sliding device **60** disposed between the sliding seat **20** and the sliding pillar **30**, and the protruding rail **31** of the sliding pillar **30** pushed against by the resisting member **51** of the adjusting unit **50**, when the present invention moves along the X-axis or Y-axis direction of the main body **10**, the counterforce thereby produced is resisted, such that the sliding pillar **30** is able to move smoothly. Also, biasing of the sliding pillar **30** is prevented.

In addition, when a bias angle **θ** is produced due the a slight deformation caused by the tool collision upon the sliding pillar **30**, the adjusting unit **50** provides a correcting mechanism, such that the axis **A** of the sliding pillar **30** and the vertical line **B** of the main body **10** are arranged in alignment with each other. With such mechanism, the known issue of the damage of sliding pillar **30** after a long period of usage due to incapability of immediately correcting the bias angle **θ** is improved. Therefore, the flexibility and convenience of the adjustment mechanism provided by the present invention is enhanced, and the service life of the present invention is increased.

Furthermore, because the present invention is applied to a large bridge type machining center with the height thereof between one to three meters and with relatively heavy overall weight. With the assistant plate **40** slidingly disposed on the second beam **13**, the weight of the sliding seat **20** is not only supported by the first beam **12** but also indirectly supported by the second beam **13.** Therefore, the sliding seat **20** is prevented from deforming due to a long period of usage.

Although particular embodiments of the invention have been described in detail for purposes of illustration, various modifications and enhancements may be made without departing from the scope of the invention. Accordingly, the invention is not to be limited except as by the appended claims.

## Claims

1. A sliding seat device with surrounding structure, comprising:
a main body (10) provided with a sliding portion (14);
a sliding seat (20) slidingly disposed on the sliding portion (14), the sliding seat (20) reciprocating along an X-axis direction of the main body (10), the sliding seat (20) provided with a housing (21);
a sliding pillar (30) passing through the housing (21), the sliding pillar (30) reciprocating along a Z-axis direction of the main body (10), one side of the sliding pillar (30) provided with a protruding rail (31) disposed along the Z-axis direction of the main body (10): **characterised in that** the sliding seat device further comprises
an assistant plate (40) connected with the sliding seat (20) and facing the protruding rail (31); and
an adjusting unit (50) passing through the assistant plate (40) and pushing against the protruding rail (31), the adjusting unit (50) correcting a vertical bias between the sliding pillar (30) and the main body (10).

2. The sliding seat device of claim 1, wherein three sides of the sliding pillar (30) excluding the side provided with the protruding rail (31) are provided with at least one sliding device (60), respectively, such that the sliding pillar (30) reciprocates along the Z-axis direction of the main body (10) by use of the at least one sliding device (60).

3. The sliding seat device of claim 2, wherein each sliding device (60) is provided with a sliding groove (61) and a sliding rail (62), each sliding groove (61) concavely disposed in the housing (21) along the Z-axis direction of the main body (10), each sliding rail (62) disposed on one side of the sliding pillar (30) along the Z-axis direction of the main body (10).

4. The sliding seat device of any of the claims 1 to 3, wherein the adjusting unit (50) is provided with a resisting member (51) and a correcting member (52), the resisting member (51) pushing against the protruding rail (31), the correcting member (52) screwedly combined with the resisting member (51), respectively, and screwedly disposed on one side of the assistant plate (40) opposite to the side of the assistant plate (40) facing the protruding rail (31).

5. The sliding seat device of claim 4, wherein the correcting member (52) comprises a moderating portion (521), the moderating portion (521) pushing against the assistant plate (40) and defining a correcting distance (L) between the correcting member (52) and the assistant plate (40), such that when the resisting member (51) moves along the Y-axis direction of the main body (10), the correcting distance (L) is adjusted.

6. The sliding seat device of claim 4 or 5, wherein the correcting member (52) and the resisting member (51) are disposed on the assistant plate (40) along the Z-axis direction of the main body (10).

7. The sliding seat device of any of the claims 4 to 6, wherein one side of the resisting member (51) is provided with a combining portion (511) and the other side of the resisting member (51) is provided with a rolling portion (512) in opposite to the combining portion (511), the combining portion (511) passing through the assistant plate (40) and being fastened with the correcting member (52), the rolling portion (512) pushing against the protruding rail (31).

8. The sliding seat device of claim 7, wherein the rolling portion (512) comprising plural needle rollers.

9. The sliding seat device of any of the claims 1 to 8, wherein the sliding portion (14) includes plural linear rails.

10. The sliding seat device of claim 9, wherein two sides of the main body (10) is provided with a pillar (11), respectively, with plural beams transversely disposed between the two pillars (11), wherein the linear rails are disposed on one side of the beams.

11. The sliding seat device of claim 10, wherein a bottom of the assistant plate (40) is slidingly disposed on one of the beams.

12. The sliding seat device of claim 11, wherein the beams comprises a first beam (12) and a second beam (13), wherein the sliding seat (20) is slidingly disposed on the first beam (12) and the assistant plate (40) is slidingly disposed on the second beam (13), wherein the first beam (12) is disposed at a position higher than the second beam (13).

## Patentansprüche

1. Schiebesitzvorrichtung mit umlaufender Struktur, umfassend:
einen Hauptkörper (10), der mit einem Gleitabschnitt (14) versehen ist;
einen Schiebesitz (20), der gleitend auf dem Gleitabschnitt (14) angeordnet ist, wobei der Schiebesitz (20) entlang einer X-Achsenrichtung des Hauptkörpers (10) hin- und herbewegt wird, wobei der Schiebesitz (20) mit einem Gehäuse (21) versehen ist;
eine Schiebesäule (30), die durch das Gehäuse (21) verläuft, wobei die Schiebesäule (30) entlang einer Z-Achsenrichtung des Hauptkörpers (10) hin- und herbewegt wird, wobei eine Seite der Schiebesäule (30) mit einer vorstehenden Schiene (31) versehen ist, die entlang der Z-Achsenrichtung des Hauptkörpers (10) angeordnet ist;
**dadurch gekennzeichnet, dass** die Schiebesitzvorrichtung weiterhin umfasst,
eine Hilfsplatte (40), die mit dem Schiebesitz (20) verbunden ist und der vorstehenden Schiene (31) zugewandt ist; und eine Verstelleinheit (50), die durch die Hilfsplatte (40) hindurchgeht und gegen die vorstehende Schiene (31) drückt, wobei die Verstelleinheit (50) eine vertikale Vorspannung zwischen der Schiebesäule (30) und dem Hauptkörper (10) korrigiert.

2. Schiebesitzvorrichtung nach Anspruch 1, wobei drei Seiten der Schiebesäule (30) mit Ausnahme der Seite, die mit der vorstehenden Schiene (31) versehen ist, mit mindestens einer Gleitvorrichtung (60) versehen sind, so dass die Schiebesäule (30) unter Verwendung der mindestens einen Gleitvorrichtung (60) entlang der Z-Achsenrichtung des Hauptkörpers (10) hin- und herbewegt wird.

3. Schiebesitzvorrichtung nach Anspruch 2, wobei jede Gleitvorrichtung (60) mit einer Gleitnut (61) und einer Gleitschiene (62) versehen ist, wobei jede Gleitnut (61) konkav im Gehäuse (21) entlang der Z-Achsenrichtung des Hauptkörpers (10) angeordnet ist, wobei jede Gleitschiene (62) auf einer Seite der Gleitsäule (30) entlang der Z-Achsenrichtung des Hauptkörpers (10) angeordnet ist.

4. Schiebesitzvorrichtung nach einem der Ansprüche 1 bis 3, wobei die Verstelleinheit (50) mit einem Widerstandselement (51) und einem Korrekturelement (52) versehen ist, wobei das Widerstandselement (51) gegen die vorstehende Schiene (31) drückt, wobei das Korrekturelement (52) verschraubt mit dem Widerstandselement (51) kombiniert ist und verschraubt auf einer Seite der Hilfsplatte (40) gegenüber der der vorstehenden Schiene (31) zugewandten Seite der Hilfsplatte (40) angeordnet ist.

5. Schiebesitzvorrichtung nach Anspruch 4, wobei das Korrekturelement (52) einen Moderationsabschnitt (521) umfasst, wobei der Moderationsabschnitt (521) gegen die Hilfsplatte (40) drückt und einen Korrekturabstand (L) zwischen dem Korrekturelement (52) und der Hilfsplatte (40) definiert, so dass, wenn sich das Widerstandselement (51) entlang der Y-Achsenrichtung des Hauptkörpers (10) bewegt, der Korrekturabstand (L) eingestellt wird.

6. Schiebesitzvorrichtung nach Anspruch 4 oder 5, wobei das Korrekturelement (52) und das Widerstandelement (51) auf der Hilfsplatte (40) entlang der Z-Achsenrichtung des Hauptkörpers (10) angeordnet sind.

7. Schiebesitzvorrichtung nach einem der Ansprüche 4 bis 6, wobei eine Seite des Widerstandselements (51) mit einem Kombinationsabschnitt (511) und die andere Seite des Widerstandselements (51) mit einem Rollabschnitt (512) gegenüber dem Kombinationsabschnitt (511) versehen ist, wobei der Kombinationsabschnitt (511) durch die Hilfsplatte (40) verläuft und mit dem Korrekturelement (52) befestigt ist, wobei der Rollabschnitt (512) gegen die vorstehende Schiene (31) drückt.

8. Schiebesitzvorrichtung nach Anspruch 7, wobei der Rollabschnitt (512) mehrere Nadelrollen umfasst.

9. Schiebesitzvorrichtung nach einem der Ansprüche 1 bis 8, wobei der Gleitabschnitt (14) mehrere Linearschienen beinhaltet.

10. Schiebesitzvorrichtung nach Anspruch 9, wobei zwei Seiten des Hauptkörpers (10) mit jeweils einer Säule (11) mit mehreren quer zwischen den beiden Säulen (11) angeordneten Trägern versehen sind, wobei die Linearschienen auf einer Seite der Träger angeordnet sind.

11. Schiebesitzvorrichtung nach Anspruch 10, wobei ein Boden der Hilfsplatte (40) verschiebbar auf einem der Träger angeordnet ist.

12. Schiebesitzvorrichtung nach Anspruch 11, wobei die Träger einen ersten Träger (12) und einen zweiten Träger (13) umfassen, wobei der Schiebesitz (20) gleitend auf dem ersten Träger (12) und die Hilfsplatte (40) gleitend auf dem zweiten Träger (13) angeordnet ist, wobei der erste Träger (12) in einer höheren Position als der zweite Träger (13) angeordnet ist.

## Revendications

1. Dispositif de siège coulissant avec la structure environnante, comprenant :
un corps principal (10) comportant une partie de coulissement (14) ;
un siège coulissant (20) disposé de manière coulissante sur la partie de coulissement (14), le siège coulissant (20) effectuant un mouvement de va-et-vient le long d'une direction d'axe X du corps principal (10), le siège coulissant (20) comportant un logement (21) ;
une colonne coulissante (30) passant à travers le logement (21), la colonne coulissante (30) effectuant un mouvement de va-et-vient le long d'une direction d'axe Z du corps principal (10), un côté de la colonne coulissante (30) comportant un rail en saillie (31) disposé le long de la direction d'axe Z du corps principal (10) ;
**caractérisé par le fait que** le dispositif de siège coulissant comprend en outre
une plaque d'assistance (40) reliée au siège coulissant (20) et faisant face au rail en saillie (31) ; et
une unité d'ajustement (50) passant à travers la plaque d'assistance (40) et poussant contre le rail en saillie (31), l'unité d'ajustement (50) corrigeant une sollicitation verticale entre la colonne coulissante (30) et le corps principal (10).

2. Dispositif de siège coulissant selon la revendication 1, dans lequel trois côtés de la colonne coulissante (30), à l'exception du côté comportant le rail en saillie (31), comportent au moins un dispositif de coulissement (60), respectivement, de telle sorte que la colonne coulissante (30) effectue un mouvement de va-et-vient le long de la direction d'axe Z du corps principal (10) en utilisant l'au moins un dispositif de coulissement (60) .

3. Dispositif de siège coulissant selon la revendication 2, dans lequel chaque dispositif de coulissement (60) comporte une rainure de coulissement (61) et un rail de coulissement (62), chaque rainure de coulissement (61) étant disposée de manière concave dans le logement (21) le long de la direction d'axe Z du corps principal (10), chaque rail de coulissement (62) étant disposé sur un côté de la colonne coulissante (30) le long de la direction d'axe Z du corps principal (10).

4. Dispositif de siège coulissant selon l'une quelconque des revendications 1 à 3, dans lequel l'unité d'ajustement (50) comporte un élément de résistance (51) et un élément de correction (52), l'élément de résistance (51) poussant contre le rail en saillie (31), l'élément de correction (52) étant combiné par vissage à l'élément de résistance (51), respectivement, et disposé par vissage sur un côté de la plaque d'assistance (40) opposé au côté de la plaque d'assistance (40) faisant face au rail en saillie (31) .

5. Dispositif de siège coulissant selon la revendication 4, dans lequel l'élément de correction (52) comprend une partie de modération (521), la partie de modération (521) poussant contre la plaque d'assistance (40) et définissant une distance de correction (L) entre l'élément de correction (52) et la plaque d'assistance (40), de telle sorte que, lorsque l'élément de résistance (51) se déplace le long de la direction d'axe Y du corps principal (10), la distance de correction (L) est ajustée.

6. Dispositif de siège coulissant selon la revendication 4 ou 5, dans lequel l'élément de correction (52) et l'élément de résistance (51) sont disposés sur la plaque d'assistance (40) le long de la direction d'axe Z du corps principal (10).

7. Dispositif de siège coulissant selon l'une quelconque des revendications 4 à 6, dans lequel un côté de l'élément de résistance (51) comporte une partie de combinaison (511) et l'autre côté de l'élément de résistance (51) comporte une partie de roulement (512) opposée à la partie de combinaison (511), la partie de combinaison (511) passant à travers la plaque d'assistance (40) et étant fixée à l'élément de correction (52), la partie de roulement (512) poussant contre le rail en saillie (31).

8. Dispositif de siège coulissant selon la revendication 7, dans lequel la partie de roulement (512) comprend plusieurs aiguilles de roulement.

9. Dispositif de siège coulissant selon l'une quelconque des revendications 1 à 8, dans lequel la partie de coulissement (14) comprend plusieurs rails linéaires.

10. Dispositif de siège coulissant selon la revendication 9, dans lequel deux côtés du corps principal (10) comportent une colonne (11), respectivement, avec plusieurs poutres disposées de manière transversale entre les deux colonnes (11), les rails linéaires étant disposés sur un côté des poutres.

11. Dispositif de siège coulissant selon la revendication 10, dans lequel une partie inférieure de la plaque d'assistance (40) est disposée de manière coulissante sur l'une des poutres.

12. Dispositif de siège coulissant selon la revendication 11, dans lequel les poutres comprennent une première poutre (12) et une seconde poutre (13), le siège coulissant (20) étant disposé de manière coulissante sur la première poutre (12) et la plaque d'assistance (40) étant disposée de manière coulissante sur la seconde poutre (13), la première poutre (12) étant disposée dans une position plus haute que la seconde poutre (13).
